Europäisches Patentamt

European Patent Office

Office européen des brevets

(19)

(11) Publication number: **0 449 576 A1**

(12) # EUROPEAN PATENT APPLICATION

(21) Application number: **91302625.8**

(22) Date of filing: **26.03.91**

(51) Int. Cl.⁵: **B01D 53/04**, // B01D53/26

(30) Priority: **30.03.90 US 502201**

(43) Date of publication of application:
**02.10.91 Bulletin 91/40**

(84) Designated Contracting States:
**BE DE ES FR GB IT NL**

(71) Applicant: **THE BOC GROUP, INC.**
**575 Mountain Avenue**
**Murray Hill New Jersey 07974 (US)**

(72) Inventor: **Jain, Ravi**
**48 Canterbury Court**
**Piscataway, New Jersey 08854 (US)**

(74) Representative: **Wickham, Michael et al**
**c/o Patent and Trademark Department The**
**BOC Group plc Chertsey Road**
**Windlesham Surrey GU20 6HJ (GB)**

(54) Purifying fluids by adsorption.

(57) Air is purified by adsorption to remove water vapour and carbon dioxide therefrom. An adsorbent vessel 30 contains a bed of adsorbent particles having four discrete regions or layers, 34, 38, 42 and 46, the layer 34 being contiguous to an inlet for air to be purified and the layer 46 being contiguous to an outlet for purified air. The layers 34 and 38 comprise particles of alumina or other adsorbent that adsorbs water vapour. The average size of the particles in the layer 38 is less than that of the particles in the layer 34. The layers 42 and 46 comprise particles of a zeolite molecular sieve that adsorbs carbon dioxide. The average size of the particles in the layer 46 is less than that of the particles in the layer 42. Use of smaller size particles decreases the length of the mass transfer zone with the bed at breakthrough and increases the utilisation of the adsorbent material.

EP 0 449 576 A1

FIGURE 1

This invention relates generally to processes and apparatus for purifying fluid and, more particularly, for removing water vapour and carbon dioxide from air by temperature-swing adsorption.

There are many existing processes and applications for purifying fluids by adsorption. One such process is the removal of water vapour and carbon dioxide from air by temperature-swing adsorption prior to chilling and distilling the air in an air separation unit. Some history of such applications is discussed in an article by M. Grenier at al. entitled "Adsorption Purification for Air Separation Units" published in Cryogenic Processes and Equipment, P. J. Kerney et al. eds. 1984 (ASME).

Typical adsorption apparatus employs a vessel containing one or more beds of an active material. In many commercial adsorption systems, vertical flow is important for flow uniformity and ease of construction, and the vessel comprises a right circular cylinder containing one or more stacked beds. The active material, container height and diameter are among the parameters which must be properly chosen in order to obtain the desired adsorption rate and capacity. Certain selection criteria are discussed in an article entitled "Adsorption System: Design by Mass-Transfer Zone Concept" by G. M. Lukchis published in Chemical Engineering, June 11, 1973, pages 111-116.

According to the mass transfer zone concept, an adsorption process can be treated as a wave front propagating through the beds along the flow axis of a container. The axial length of the container is divided into three zones: an equilibrium zone of length $L_{eq}$ behind the wave front where the adsorbate concentration corresponds to the concentration $X_e$ of adsorbate in the feed stream; a mass transfer zone of length $L_{MT}$ in the region of the wave front, where the concentration decreases from $X_e$ to $X_o$, the concentration of an unused bed; and an unused adsorbent zone of length $L_0$ ahead of the front where the adsorbate concentration is $X_o$. The actual length of the bed is the sum

$$L = L_{eq} + L_{MT} + L_0$$

Usually an adsorption process is allowed to continue in a bed until "breakthrough" when the leading edge of the wave front just reaches the outlet end and $L_0$ becomes O. The adsorbent equilibrium capacity is the quantity of adsorbate divided by the quantity of adsorbent in the equilibrium zone.

Although most commercial adsorption apparatus involves axial flow along cylindrical containers, apparatus involving radial flow has also been developed. US. Patent 4,541,851 to Bosquain et al. discloses such radial flow reactors for drying and decarbonisation of air. In one embodiment, this patent discloses a reactor having three annular beds: an inner bed of spherical activated alumina particles having a diameter of 5 to 10 mm, an intermediate bed of spherical activated alumina particles having smaller diameters in the range 1 to 5 mm, and an outer bed of molecular sieve having diameters in the range 1.6 to 2.5 mm. Gas is purified during flow directed radially outward and regenerated by flow directed radially inward. This patent indicates that the use of the larger alumina spheres in the inner bed is necessary to enable the use of high flow velocities without causing attrition or destruction of particles. Smaller alumina particles may be used at greater radial distances where the flow velocity is reduced.

One persistent problem in the design of the adsorption systems is to obtain better utilisation of the active material. Improved utilisation enables a reduction in the amount of active material required for a given adsorption process, a reduction in the size of the apparatus to obtain the same adsorption, or both.

According to the present invention there is provided apparatus for purifying fluid by adsorption comprising:

a container that has an inlet and an outlet for the fluid to be treated arranged for generally axial fluid flow through the container;

first and second adsorbent regions within the container; and

particles of an adsorbent material in the first and second adsorbent regions for treating the fluid flowing through the regions, wherein the average size of the particles in the second region is less than in the first region.

The present invention makes use of the fact that the utilisation of active material in an axial flow adsorption process can be improved by reducing the length of the mass transfer zone without an excessive increase in the pressure drop. Because of the shape of the concentration wave front, it is impossible totally to utilise the adsorbent material in the mass transfer zone. If the shape of the concentration wave front is assumed to be symmetrical, the effective utilisation of adsorbent in the mass transfer zone is approximately one-half of that for an equal length in the equilibrium zone.

At breakthrough, the effective length $L_{ef}$ of an adsorption bed is given by

$$L_{ef} = L_{eq} + 1/2 \, L_{MT}$$

A bed utilisation efficiency h is defined as the ratio $L_{ef}/L$. For a given actual length L of an adsorption bed, reducing the length of the mass transfer zone $L_{MT}$ increases the maximum length of the equilibrium zone $L_{eq}$ and this increases the effective length $L_{ef}$ and the utilisation efficiency h. The length of a mass transfer zone in an adsorber can be decreased by decreasing the average dimension of the adsorbent particles in the zone. Use of smaller size particles throughout the bed is undesirable because the increased pressure drop consumes excessive energy.

Ideally, the length of the second region is chosen just greater than that necessary to contain the mass transfer zone at the time of breakthrough. In usual practice, a certain safety margin is allowed. While the length of the second region may be from 100 to 200% of the expected mass transfer zone at breakthrough, a range of 120 to 150% is preferred to provide adequate protection against breakthrough. Thus, at breakthrough the mass transfer zone is confined within the second region.

The particles in any region need not be identical in size, but a variation of no more than about 25% from the mean average dimension is preferred. In a preferred embodiment, the ratio of the average particle size in the second region to that in the first region is less than 0.7. Such a ratio in the range of 0.25 to 0.5 is even more preferred.

In examples in which two or more active materials are used, such as for removing water vapour and carbon dioxide from air, it is preferred that the particles of each adsorbent material be arranged into two adjacent regions and that for each material, the average particle size in the second region is smaller than that in the first or upstream region. Thus, in such examples, there are four adsorbent regions. The first two regions preferably each comprise particles of alumina which adsorbs water vapour, and the third and fourth regions are of a zeolite molecular sieve that adsorbs carbon dioxide. If desired, only a single size of particles of one material may be used. Preferably, each adsorbent region comprises a discrete layer in a single bed of adsorbent.

In order to obtain uniform distribution of fluid flow throughout the container, a cylindrical container is preferred and a right circular cylindrical container is more preferred. Although some radial component of the flow is permissible, the flow should be primarily in an axial direction along the length of the container. If desired, the major axis of the vessel may be horizontal but the adsorbent layers are still desorbed vertically in such an arrangement.

An apparatus according to the invention will now be described by way of example with reference to the accompanying drawings.

FIGURE 1 is a schematic view of an embodiment of this invention in which temperature-swing adsorption is used for the purification of gas.

Figure 2 is a graph showing the location of two concentration wave fronts just before breakthrough in a vessel containing beds of two different adsorbent materials.

Each vessel is designed to contain beds of two separate adsorbents, say, X and Y which are used for the removal of two different impurities, say, A and B, adsorbent X for the removal of A and adsorbent Y for the removal of B. It should be understood, however, that this invention is not limited to two adsorbents or two impurities. In some instances one adsorbent is sufficient and in many cases a single adsorbent will remove more than one impurity. Three or more adsorbents may be used if necessary.

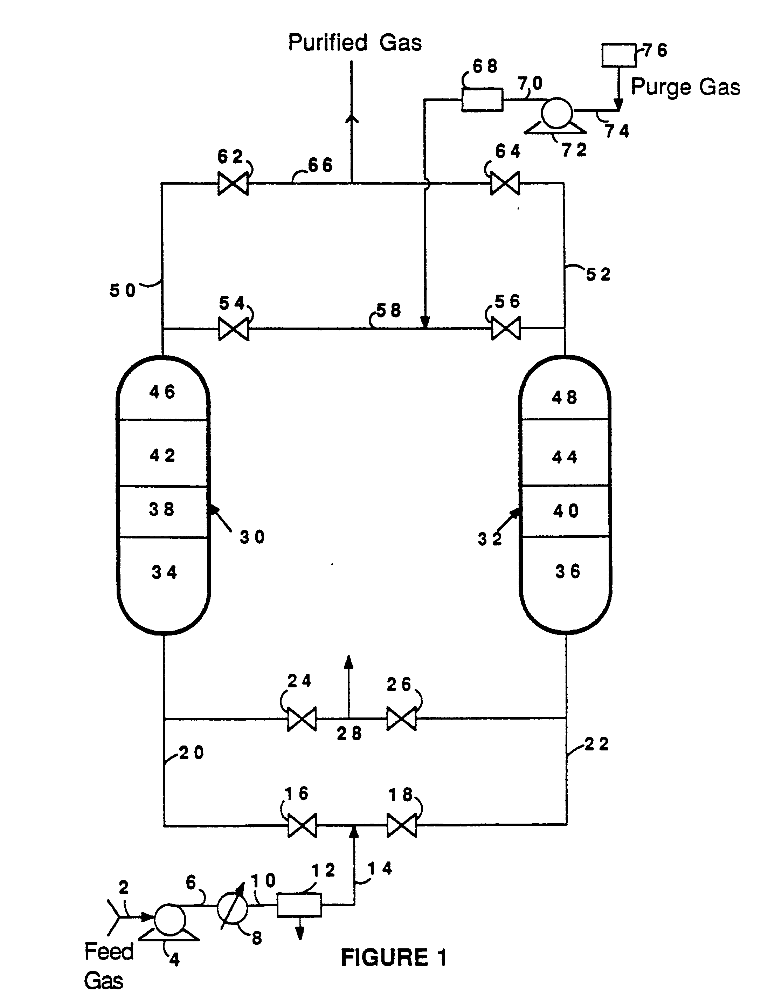

In the apparatus of FIGURE 1, a feed gas stream, for example compressed air, is passed via a line 2 to a compressor 4 wherein the gas is compressed to a pressure between 0.14 MPa and 1.14 MPa (20 and 165 psia). The compressed gas is then sent via a line 6 to a heat exchanger 8 wherein it is cooled prior to introduction via line 10 into a water separator 12 to remove liquid water therefrom. The effluent from the heat exchanger is preferably at a temperature between 5 and 25°C.

The gas is then sent via a piping manifold 14 through a valve 16 and the manifold 20 to the bottom of a treatment vessel 30 which contains an adsorbent bed comprising four adsorbent sections (otherwise called regions or layers), 34, 38, 42 and 46, in sequence from bottom to top. The adsorbent sections 34 and 38 contain adsorbent X for the removal of component A and adsorbent sections 42 and 46 contain adsorbent Y for the removal of component B. If the gas mixture to be purified is air and the components A and B to be removed are $H_2O$ and $CO_2$, respectively, then the preferred adsorbents for sections 34 and 38 are activated alumina or silica gel while the preferred adsorbents for sections 42 and 46 are type A or type X zeolites which selectively adsorb carbon dioxide (but not nitrogen or oxygen). The treatment vessel 32 is essentially same as treatment vessel 30 and contains a single adsorbent bed having four regions or layers, namely an adsorbent section 36 corresponding to adsorbent section 34, adsorbent section 40 corresponding to adsorbent section 38, adsorbent section 44 corresponding to adsorbent section 42 and adsorbent section 48 corresponding to adsorbent section 46. More details of these adsorption sections are given below.

At the start of the purification cycle, treatment vessel 30 is slowly pressurised using part of the feed gas which is passed to it through open valve 16 and manifold 20. Purified gas containing no more than the specified amount of impurities is withdrawn from the treatment vessel 30 through a manifold 50 and a valve 62 to a manifold 66 where it may be further purified in a downstream process or may be sent to another process or equipment for use in its present form.

At the same time the treatment vessel 30 is purifying the gas feed, another treatment vessel 32 is undergoing regeneration to remove accumulated impurities. Vessel 32 is first vented to reduce the pressure therein to close to atmospheric. This is carried out by opening valve 26 thereby venting through manifold 22 and exit manifold 28. Further impurities are removed by purging the vessel 32 with a gas that is substantially free of the

4

type of impurities to be removed from vessel 32. When for example, water or carbon dioxide impurities are to be removed from air feed, a suitable purge gas is nitrogen, oxygen or mixtures thereof which are free of water vapour and carbon dioxide. The source 76 of the purge gas may be a side stream from the purified gas stream 66 or from a waste stream of a downstream process.

A purge gas from a suitable source 76 is fed via a line 74 to an optional blower 72 where the pressure of the gas may be raised, if necessary, into a range of about 110 to 140 kPa (16 to 20 psia).

Typically the temperature of the purge gas entering the system through line 74 is close to that of the feed gas. The purge gas is heated in the heater 68, preferably to a temperature of from about 80° to 250°C. The heated gas passes to vessel 32 through the line 58, the open valve 56 and the line 52, and then exhausts to a line 28 via the open valve 26, thereby removing previously adsorbed impurities from the vessel.

The heat supplied by the purge gas must be sufficient to desorb the impurities in vessel 32. It is preferable to turn off the heater 68 after sufficient heat has been introduced into the vessel 32. The amount of heat required for a given vessel can be easily determined by experiment. The flow of purge gas continues after heater 68 has been turned off in order to remove desorbed impurities and to cool the vessel 32 in preparation for the next purification cycle. After the vessel 32 has cooled sufficiently, it is slowly repressurised using a portion of the feed gas through the open valve 18 and the line 22. The vessel 30 continues to purify the feed during this time.

Once venting, purging and repressurisation are completed, the vessel 32 is ready again for purification. This is done by closing the valve 16 and opening the valve 18 so that the gas stream flows from the line 14 to line 22 and then through the various adsorption sections in vessel 32. The purified gas obtained from the vessel 32 passes through the line 52 and a valve 64 into the exit line 66. At the same time, regeneration of vessel 30 proceeds by closing the valve 16, venting the vessel 30 through manifold 20, open valve 24 and exit line 28, and then introducing the purge gas via lines 70, 58, and valve 54 into the line 50. After regeneration, vessel 30 is pressurised again and produces purified gas while vessel 32 undergoes regeneration. The cyclical purification process can run continuously in this manner.

The complete cycle time for the adsorption process described in FIGURE 1 is normally from about 8 to 24 hours. A complete cycle for a two-vessel process operated in the temperature-swing mode is given in Table I below.

## TABLE I

### TWO-VESSEL TSA PROCESS

| Step | Valves | Typical Open | Time (hours) |
|------|--------|--------------|--------------|
| a. | Pressurise vessel 30 with feed, purify using vessel 32 | 16, 18, 64 | 0.25 |
| b. | Purify using vessel 30, vent vessel 32 to atmosphere | 16, 26, 62 | 0.25 |
| c. | Purify using vessel 30, regenerate vessel 32 with hot purge gas | 16, 26, 56, 62 | 2.5 |
| d. | Purify using vessel 30, cool vessel 32 with purge gas | 16, 26, 56, 62 | 5.0 |
| e. | Purify using vessel 30, pressurise vessel 32 with feed | 16, 18, 62 | 0.25 |
| f. | Purify using vessel 32, vent vessel 30 to atmosphere | 18, 24, 64 | 0.25 |
| g. | Purify using vessel 32, regenerate vessel 30 with hot purge gas | 18, 24, 54, 64 | 2.5 |
| h. | Purify using vessel 32, cool vessel 30 with purge gas | 18, 24, 54, 64 | 5.0 |
| | | TOTAL | 16.0 hrs |

The process of Table I can be utilised to remove $H_2O$ and $CO_2$ from air. For this application, activated alumina (AA) is used for $H_2O$ removal and a 13X zeolite (13X) is used for $CO_2$ removal. Generally spherical particles of AA having average diameters in the range 1.5 to 6 mm are commercially available, as are generally spherical particles of zeolites having average diameters in the range 0.6 to 5 mm. For convenience, generally spherical particles of activated alumina having diameters of approximately 3.2 mm (0.125 inches) and 1.6 mm (0.063 inches) are referred to below as 1/8" AA and 1/16" AA, respectively. Similarly, generally spherical particles of 13X zeolite having the same approximate diameters are referred to below as 1/8" 13X and 1/16" 13X, respectively.

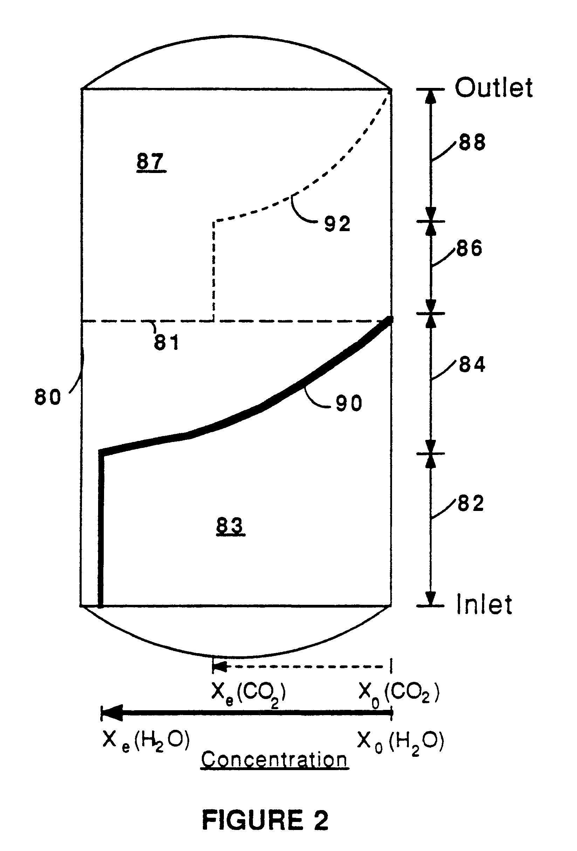

Figure 2 illustrates a vessel 80 containing two adsorbent beds: a bed 83 of AA below line 81 and a bed 87 of 13X above line 81. Figure 2 also shows a curve 90 of the $H_2O$ concentration just before breakthrough in the lower bed, the concentration ranging from $X_e$ ($H_2O$) to $X_o$ ($H_2O$). Similarly, curve 92 is the concentration of $CO_2$ just before breakthrough in the upper bed, ranging from $X_e$ ($CO_2$) to $X_o$ ($CO_2$). The total bed length can be divided into four sections:

$$L = LH20_{eq} + LH20_{MT} + LCO2_{eq} + LCO2_{MT}$$

where:

$L$ = Total bed length,
$LH20_{eq}$ = Equilibrium zone length 82 for $H_2O$,
$LH20_{MT}$ = Mass transfer zone length 84 for $H_2O$,
$LCO2_{eq}$ = Equilibrium zone length 86 for $CO_2$, and
$LCO2_{MT}$ = Mass transfer zone length 88 for $CO_2$

For symmetric concentration profiles in the mass transfer zones, the bed utilisation in the mass transfer zone is only one-half of its equilibrium capacity, and the effective bed length is:

$$L_{ef} = LH20_{eq} + 1/2 \, LH20_{MT} + LCO2_{eq} + 1/2 \, LCO2_{MT}$$

Typical zone lengths can be determined by experiment. Table II gives results expected for a two-vessel adsorption apparatus with an air feed at 20°C temperature, 655 kPa (95 psia) pressure, 0.203 m/sec superficial velocity and 4 hr adsorption time.

Column A of the Table II corresponds to a conventional adsorption arrangement wherein each vessel has a single layer of 1/8" AA for $H_2O$ removal and a single layer of 1/8" 13X for $CO_2$ removal.

## TABLE II

### MASS TRANSFER ZONE LENGTHS

| | | A | B | C |
|---|---|---|---|---|
| $LH20_{eq}$ (mm) | | 300 | 300 | 366 |
| $LH20_{MT}$ (mm) | 200 | 67 | 67 | |
| $LCO2_{eq}$ (mm) | | 600 | 600 | 767 |
| $LCO2_{MT}$ (mm) | | 500 | 167 | 167 |
| L (mm) | | 1600 | 1134 | 1367 |
| $L_{ef}$ (mm) | | 1250 | 1017 | 1250 |
| h | | 0.78 | 0.90 | 0.91 |

Column B corresponds to an arrangement according to the invention wherein each vessel has two layers (34 and 38, respectively, in vessel 30) of 1/8" AA and 1/16" AA for $H_2O$ removal and two layers (42 and 46, respectively, in vessel 30) of 1/8" 13X and 1/16" 13X for $CO_2$ removal. In Case B, the use of smaller sized particles in regions 38 and 46 than in regions 34 and 42 (and in the corresponding regions of vessel 32) provides mass transfer zone lengths that are only one-third the original mass transfer zone lengths.

The data show that the configuration of column B has an effective bed utilisation of 0.90 compared to 0.78 for the conventional configuration of column A. Column C corresponds to an arrangement according to the invention for which the bed height provides the same equilibrium capacity as for column A. The actual length required, 1367 mm (column C), is about 15% less than the bed height for a conventional design utilising single size adsorbents (column A).

## COMPARATIVE EXAMPLE 1

A vertically mounted, right-circular cylinder with a diameter of 11 cm (4.3") and external insulation was used as a test vessel for removing of $H_2O$ and $CO_2$ from compressed air. The feed air had a pressure of 724 kPa (105 psia), a flow rate of 0.66 $Sm^3$/min (23.2 SCUM) and a temperature of 20°C. The feed air contained a saturation amount of water vapour and about 330 ppm $CO_2$.

The vessel contained a first layer of 4.7 kg (10.4 lbs) of commercially available 1/8" AA for water removal. The total height of the activated alumina layer was 610 mm.

A layer of commercially available 1/8" 13X was used for $CO_2$ removal. The weight and height of the zeolite layer are given in Table III.

The $CO_2$ equilibrium capacity of the 13X bed was determined by measuring concentration profiles in the bed. The $CO_2$ mass transfer zone length $LCO2_{MT}$ at the bed outlet, measured as the distance between the 1 ppm and 330 ppm $CO_2$ concentrations, was also determined. The effective adsorber length $L_{ef}$ and fractional bed utilisation for $CO_2$ (assuming a symmetric mass transfer front) were calculated. Similarly, the total $CO_2$ capacity of the bed was calculated as the product of the fractional bed utilisation times the 13X sieve weight times the $CO_2$ equilibrium capacity. The results are given in Table III.

## EXAMPLE 2

Example 2 utilises the same vessel and feed gas conditions of Example 1. Again the vessel contained a single layer of the same height and weight of 1/8" AA for water removal. The vessel also contained a layer of 1/8" 13X and a layer of 1/16" 13X for removal of $CO_2$. The height and weight of the 13X layers is given in Table III.

The measured $CO_2$ equilibrium capacity of the bed and the $CO_2$ mass transfer zone length at the bed outlet were determined, and the effective mass transfer length and fractional bed utilisation in the $CO_2$ removal zone were calculated as indicated in Table III.

Table III enables the comparison of the results for Example 1, utilising a single size sieve for $CO_2$ removal, and Example 2, utilising two sizes of sieve for $CO_2$ removal. The values for $L_{ef}$ and h in Table III are calculated for the 13X layers only and do not take into account the single AA layer which removes $H_2O$ vapour. For the same total height and weight, the $CO_2$ removal capacity of the two size configuration of Example 2 is about 17% more than the capacity of the single layer for Example 1. Thus, to process the same amount of air, about 17% less sieve would be required for the configuration of Example 2 compared to the conventional configuration of Example 1. This reduction is the result of utilising the smaller size sieve in the $CO_2$ mass transfer zone.

## TABLE III

### RESULTS FOR $CO_2$ ADSORPTION EXAMPLES

| Example | 1 | 2 | 3 | 4 |
|---|---|---|---|---|
| Length 1/8" 13X (mm) | 1175 | 537 | 1175 | 537 |
| Length 1/16" 13X (mm) | 0 | 638 | 0 | 638 |
| Weight 1/8" 13X (kg) | 7.4 | 3.4 | 7.4 | 3.4 |
| Weight 1/16" 13X (kg) | 0 | 4.0 | 0 | 4.0 |
| $LCO2_{MT}$ (mm) | 550 | 260 | 630 | 270 |
| $L_{ef}$ (mm) | 900 | 1045 | 860 | 1040 |
| $CO_2$ eq. capacity (wt%) | 2.60 | 2.60 | 2.56 | 2.56 |
| Bed Utilisation h | 0.766 | 0.89 | .732 | .885 |
| $CO_2$ Capacity (kg) | 0.147 | 0.171 | 0.139 | 0.168 |

## EXAMPLES 3 & 4

The same vessel was used as in Examples 1 and 2. Feed air at a temperature of 20°C, a pressure of 620 kPa (90 psia) was passed through the vessel at a flow rate of 0.57 Sm³/min (20.0 SCFM). The feed air was saturated with water vapour and contained about 330 ppm $CO_2$.

In comparative Example 3, the vessel was filled with 1/8" AA and 1/8" 13X just as in Example 1. In Example 4, the vessel was filled with layers of 1/8" AA, 1/8" 13X and 1/16" 13X just as in Example 2. The results for Examples 3 and 4 are shown in Table III.

In comparison, the $CO_2$ capacity of the two layer 13X bed in Example 4 is about 21% more than the $CO_2$ capacity of the single layer 13X bed in Example 3. This comparison illustrates that the use of smaller size particles in the mass transfer zone produces bigger benefits when the mass transfer zone occupies a larger fraction of the bed length.

## COMPARATIVE EXAMPLES 5 AND 6

The vessel used in the previous examples was utilised to determine the equilibrium capacities and water mass transfer zone lengths for different size activated aluminas. In Example 5, the vessel contained a single layer of 1/8" AA, the height and weight as shown in Table IV. Air at a temperature of 20°C, pressure of 724 kPa (105 psia) and a flow rate of 0.66 Sm³/min (23.2 SCFM). The feed air was saturated with water.

The $H_2O$ equilibrium capacity of the AA bed was determined by measuring concentration profiles. Similarly, the $H_2O$ mass transfer zone length at the bed outlet, defined as the distance between the 5 ppm and saturation $H_2O$ fronts, was also measured. The results are shown in Table IV.

In Example 6, the same vessel and flow conditions as in Example 5 were used with a single layer of 1/16" AA for water removal. The $H_2O$ equilibrium capacity and mass transfer zone length at the bed outlet were measured as indicated in Table IV. The effective adsorption length and the fractional bed utilisation of Examples 5 and Example 6 are given in Table IV. The total water capacity for the same bed height is about 13% more for Example 6 as compared to Example 5.

## TABLE IV

### RESULTS FOR $H_2O$ AND $CO_2$ ADSORPTION EXAMPLES

| EXAMPLE | 5 | 6 | 7 | 8 |
|---|---|---|---|---|
| Length 1/8" AA (mm) | 610 | 0 | 610 | 440 |
| Length 1/16" AA (mm) | 0 | 610 | 0 | 110 |
| Length 1/8" 13X (mm) | 0 | 0 | 1175 | 770 |
| Length 1/16" 13X (mm) | 0 | 0 | 0 | 260 |
| Weight AA (kg) | 4.7 | 4.7 | 4.7 | 4.25 |
| Weight 13X (kg) | 0 | 0 | 7.4 | 6.5 |
| $LH2O_{MT}$ (mm) | 230 | 110 | 230 | 110 |
| $LCO2_{MT}$ (mm) | – | – | 550 | 260 |
| L (mm) | 610 | 610 | 1785 | 1580 |
| $L_{ef}$ (mm) | 495 | 555 | 1395 | 1395 |
| $H_2O$ eq. capacity (wt %) | 29.0 | 29.0 | 29.0 | 29.0 |
| $CO_2$ eq. capacity (wt %) | – | – | 2.6 | 2.6 |
| Bed utilisation h | 0.81 | 0.91 | 0.78 | 0.88 |
| $H_2O$ capacity (kg) | 1.10 | 1.24 | 1.10 | 1.10 |
| $CO_2$ capacity (kg) | 0 | 0 | 0.15 | 0.15 |

## EXAMPLES 7 & 8

Examples 7 and 8 utilise the data from Examples 1 and 2 (Table III) and from Examples 5 and 6 (Table IV) to illustrate the benefits of the invention for the removal of two impurities, $H_2O$ and $CO_2$, utilising two adsorbents, activated alumina and 13X zeolite. The feed conditions are same as in Examples 1, 2, 5 and 6 and the results are given in Table IV. Column 7 of Table IV is a comparative example of a conventional system for which 1/8" size activated alumina is used for $H_2O$ removal and 1/8" size 13X zeolite is used for $CO_2$ removal. Column 8 is an example according to the invention for which layers of 1/8" and 1/16" of both activated alumina and 13X zeolite are utilised. The various layer lengths in column 8 were calculated and adjusted to give same equilibrium

capacity for $CO_2$ and $H_2O$ as in column 7. For beds with identical $CO_2$ and $H_2O$ capacities, the results show that a bed designed according to the invention (column 8) requires about 12% less bed volume compared to a conventional bed (column 7).

The purified air produced by operation of the apparatus shown in Figure 1 is suitable for separation by rectification into nitrogen and oxygen.

**Claims**

1. Apparatus for purifying fluid by adsorption comprising:

   a container that has an inlet and an outlet for the fluid to be treated arranged for generally axial fluid flow through the container;

   first and second adsorbent regions within the container; and

   particles of an adsorbent material in the first and second adsorbent regions for treating the fluid flowing through the regions, wherein the average size of the particles in the second region is less than in the first region.

2. Apparatus according to claim 1, wherein the apparatus is adapted to purify a gas mixture by temperature swing adsorption, and in use, at breakthrough, the mass transfer zone is confined within the second region.

3. Apparatus according to claim 1 or claim 2, wherein the first and second adsorbent regions each comprise a layer of particles of a material which in use adsorbs water vapour from a gas mixture to be purified, and wherein the first layer is contiguous to the container inlet.

4. Apparatus according to any preceding claims, wherein the ratio of the average particle size in the second region to that in the first region is less than 0.7.

5. Apparatus according to claim 4, wherein the said ratio is in the range 0.25 to 0.5.

6. Apparatus according to claim 4 or claim 5 wherein the particles in the first and second regions are of activated alumina.

7. Apparatus according to claim 6, wherein the particles in the first region are generally spherical with an average diameter in the range 3 to 6 mm.

8. Apparatus according to any preceding claim, wherein there are third and fourth adsorbent regions in the container, the third region being downstream of the second region, and the fourth region downstream of the third region, said third and fourth regions comprising particles of an adsorbent different from the adsorbent in the first and second regions, the average size of the particles in the fourth region being less than that of the particles in third region.

9. Apparatus according to claim 8, wherein said third and fourth adsorbent regions each comprise a layer of particles of a material which in use adsorbs carbon dioxide from a gas mixture to be purified, and the fourth layer is contiguous to the container outlet.

10. Apparatus according to claim 8 or claim 9, wherein the third and fourth region comprise particles of zeolite molecular sieve each having an average diameter in the range of 2 to 5 mm, and the ratio of average particle diameter of the fourth region to that of the third region is less than 0.7.

11. Apparatus according to any one of the preceding claims, wherein the adsorbent regions are each a layer in a single bed of adsorbent particles.

12. A method of purifying air or other gas mixture by passing the air through an apparatus as claimed in any preceding claim.

Purified Gas

Purge Gas

**FIGURE 1**

**FIGURE 2**

**European Patent Office**

## EUROPEAN SEARCH REPORT

Application Number

EP 91 30 2625

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 8, no. 77 (C-218)[1514], 10th April 1984; & JP-A-59 004 415 (NIHON SANSO) 11-01-1984 * Whole abstract * | 1,4,5,7 | B 01 D 53/04 // B 01 D 53/26 |
| X,P | US-A-4 964 888 (G.Q. MILLER) * Claims 1-34 * | 1 | |
| X,P | WO-A-9 103 307 (E. PERTICOME) * Claim 1; page 5, line 24 - page 6, line 9 * | 1,8 | |
| X | GB-B-1 417 528 (Y. SUZUKI) * Figure 2 * | 1,8 | |
| A | US-A-3 161 488 (S.C. EASTWOOD) * Column 2, line 15 - column 3, line 37 * | 1 | |
| D,A | US-A-4 541 851 (M. BOSQUAIN) * Figure 4; column 7, line 56 - column 8, line 17 * | 1 | TECHNICAL FIELDS SEARCHED (Int. Cl.5) |
| A | EP-A-0 232 840 (AIR PRODUCTS) * Fig.; page 5, lines 13-35 * | 1-12 | B 01 D |

The present search report has been drawn up for all claims

| Place of search | Date of completion of the search | Examiner |
|---|---|---|
| THE HAGUE | 25-06-1991 | KANOLDT W.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)